# EUROPEAN PATENT APPLICATION

(11) **EP 4 722 066 A1**
(43) Date of publication of application: **08.04.2026**
(21) Application number: 25192860.2
(22) Date of filing: 30.07.2025
(51) Int. Cl.: B60W 30/18, B60W 30/188, F02D 41/02, F02D 41/12, F02D 41/22, F02N 11/08, B60W 30/184, F02D 31/00, F02D 41/04

(54) **CONTROL DEVICE OF VEHICLE**

(30) Priority: 05.09.2024 JP 2024153197
(71) Applicant: Suzuki Motor Corporation, Shizuoka 432-8611 (JP)
(72) Inventor: IMAMURA, Yuichi, HAMAMATSU-SHI, 432-8611 (JP); YAMAMOTO, Wataru, HAMAMATSU-SHI, 432-8611 (JP); FURUKAWA, Shinya, HAMAMATSU-SHI, 432-8611 (JP)
(74) Representative: Plasseraud IP

(57) **Abstract**

[Object]

It is to provide a control device of a vehicle capable of preventing an exhaust system component(s) for an engine from being overheated.

[Solution]

There is provided a vehicle with an engine and a control unit. The control unit is configured to execute an engine racing control of racing the engine, while an accelerator operation amount exceeds a threshold value TH1 with a non-travel range. The control unit is to terminate the engine racing control to thereby stop the engine, when the engine racing control is continued for an upper limit period of time TL.

## Description

### [Technical Field]

The present invention relates to a control device of a vehicle.

### [Background Art]

As a prior art, there is known Patent Literature 1 which discloses a technique as to a vehicle, in which a racing is to be executed when there occurs a driver's accelerator operation by an amount of a threshold value or larger while a shift range is in a parking range (hereinafter also referred to simply as "P range"). Additionally, Patent Literature 1 discloses that a power to be outputted from an engine is to be limited when temperature of a cooling water in the engine reaches or exceeds a predetermined temperature.

### [Citation List]

### [Patent Literature]

[Patent Literature 1] JP 2020-199950 A

### [Summary of Invention]

### [Technical Problem]

However, in such a prior art, if the racing is continued with temperature of the cooling water in the engine being lower than the predetermined temperature, the power to be outputted from the engine is non-limited to thereby cause a problem that an exhaust system component(s) for the engine may be overheated.

The present invention has been made in consideration of the above-mentioned circumstances, and an object thereof is to provide a control device of a vehicle capable of preventing an exhaust system component(s) for an engine from being overheated.

### [Solution to Problem]

According to an aspect of the present invention, there is provided a control device of a vehicle with an engine, including a control unit to execute an engine racing control of racing the engine, while an accelerator operation amount exceeds a threshold value with a non-travel range being selected, wherein when a period of time, for which the engine racing control is continued, reaches an upper limit period of time, the control unit is to terminate the engine racing control to thereby stop the engine.

### [Advantageous Effect of Invention]

According to the present invention, it is possible to prevent an exhaust system component(s) for an engine from being overheated.

### [Brief Description of Drawings]

FIG. 1 is a diagram of a vehicle mounted with a control device according to an embodiment of the present invention.
FIG. 2 is a flowchart which shows a racing control process to be performed by the control device according to the embodiment.
FIG. 3 is a timing chart which shows an example of a vehicle state transition when the racing control process is performed by the control device according to the embodiment.

### [Description of Embodiment]

A control device according to an embodiment of the present invention is mounted on a vehicle with an engine, which includes a control unit to execute an engine racing control of racing the engine, while an accelerator operation amount exceeds a threshold value with a non-travel range being selected, wherein when a period of time, for which the engine racing control is continued, reaches an upper limit period of time, the control unit is to terminate the engine racing control to thereby stop the engine.

Accordingly, it is possible to prevent an exhaust system component(s) for an engine from being overheated.

### [Embodiment(s)]

Hereinafter, referring to Figs., a vehicle mounted with a control device according to an embodiment of the present invention will be described.

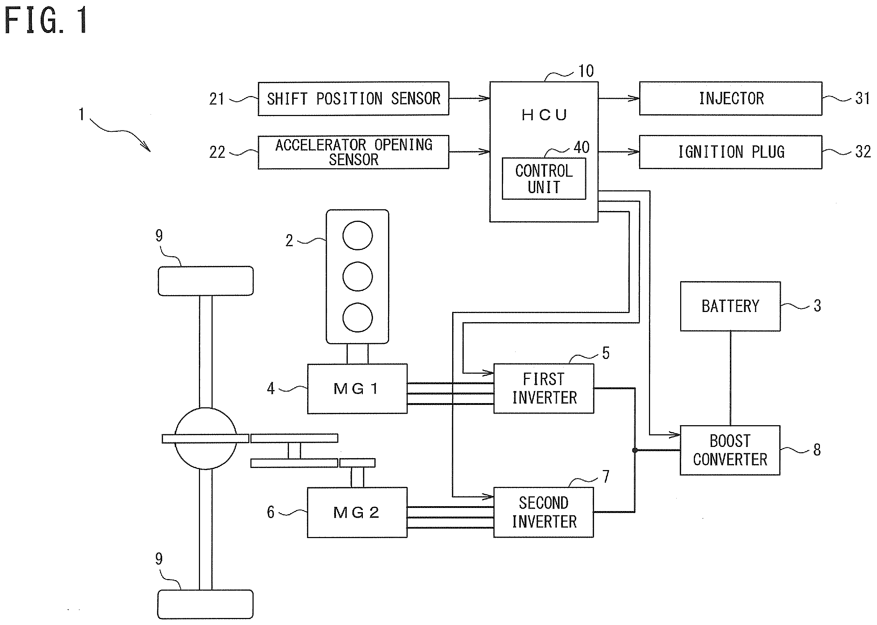

As shown in FIG. 1, a vehicle 1 includes an internal combustion engine 2 (hereinafter referred to simply as "engine"), a battery 3, a first motor 4 (hereinafter also referred to as "MG1"), a first inverter 5, a second motor 6 (hereinafter also referred to as "MG2"), a second inverter 7, a boost converter 8, driving wheels 9, and a hybrid controller 10 (hereinafter referred to simply as "HCU").

The engine 2 is formed with a plurality of cylinders. The engine 2 is configured to perform, for each of the cylinders, a series of four steps of an intake step, a compression step, an expansion step, and an exhaust step, to thereby generate a mechanical power.

The battery 3 is of a secondary battery (i.e., rechargeable battery), such as a lithium-ion battery. The battery 3 is configured to store an electric power generated by the MG1/MG2, to thereby supply the stored electric power to the MG1 and the MG2 to drive them.

The MG1 is connected to a crankshaft of the engine 2 so as to rotate together therewith. The MG1 is electrically connected to the battery 3 through the first inverter 5 and the boost converter 8. The MG1 has a motor function of rotating with an electric power supplied from the battery 3 to thereby start the engine 2, and a generator function of converting a mechanical power generated by the engine 2 into an electric power.

The MG2 is connected to the driving wheels 9 through a power transmission member such as a gear mechanism, to thereby rotate together with the driving wheels 9. The MG2 is electrically connected to the battery 3 through the second inverter 7 and the boost converter 8.

The MG2 has a motor function of rotating with an electric power supplied from the battery 3 and/or the MG1 to thereby rotate the driving wheels 9, and a generator function of converting a rotation force of the driving wheels 9 into an electric power.

The boost converter 8 is disposed between the battery 3 and the first and second inverters 5, 7, which is configured to boost a voltage of an electric power to be supplied from the battery 3 to the first and second inverters 5, 7 and to step down a voltage of an electric power to be supplied from the first and second inverters 5, 7 to the battery 3.

The HCU 10 is constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the HCU 10, in addition to various constants and maps. That is, the CPU executes the program stored in the ROM using the RAM as an operation area, causing the computer unit to function as the HCU 10.

The input port of the HCU 10 is connected with various sensors including a shift position sensor 21 to detect a shift position (e.g., P range, R range, N range, or D range), and an accelerator opening sensor 22 to detect as an accelerator opening an amount of a driver's operation to an accelerator pedal (hereinafter also referred to simply as "accelerator operation amount").

The output port of the HCU 10 is connected with various control-targets including the first inverter 5, the second inverter 7, the boost converter 8, injectors 31 to supply a fuel into the engine 2, and ignition plugs 32 to ignite the supplied fuel in respective combustion chambers of the engine 2.

Note that the engine 2 may be of a diesel engine with no ignition plugs. In this case, the ignition plugs 32 becomes unnecessary to be installed on the vehicle 1.

The HCU 10 is configured to control the various control-targets connected to the output port, based on information acquired from the various sensors connected to the input port. In the embodiment, the HCU 10 functions as a control unit 40 to execute an engine racing control of racing the engine 2 when the accelerator operation amount exceeds a threshold value TH1 while a non-travel range (e.g., P range or N range) is selected by the driver (i.e., while the shift position sensor 21 detects the non-travel range as the shift position).

Specifically, for example, while the parking range (P range) is detected as the shift position by the shift position sensor 21, when the accelerator operation amount detected by the accelerator opening sensor 22 exceeds the threshold value TH1, the HCU 10 is to start the engine racing control (i.e., start to race the engine 2).

The threshold value TH1 is set in advance for the accelerator operation amount, above which the accelerator pedal is to be determined to be turned on (i.e., the driver is allowed to be determined to request a vehicle drive). In other words, the threshold value TH1 corresponds to a margin for a depression to the accelerator pedal.

In the engine racing control, in order to start the engine 2, the HCU 10 causes the injectors 31 and the ignition plugs 32 to start the fuel supply and the ignition respectively, while regulating the first inverter 5 to drive the MG1 to thereby rotate a crankshaft of the engine 2.

The HCU 10 terminates the engine racing control to thereby stop the engine 2, when a continuous period of time, for which the engine racing control is continued to be activated (hereinafter referred to simply as "racing period of time"), reaches a threshold value for period of time (namely, upper limit period of time TL) (i.e., when the upper limit period of time TL elapses after the engine racing control is started). Such an upper limit period of time TL is set in advance, up to which an exhaust system component(s) for the engine 2 is expected not to be overheated.

Then, the HCU 10 causes the injectors 31 and the ignition plugs 32 to stop the fuel supply and the ignition, to thereby stop the engine 2, for example.

After terminating the engine racing control to thereby render the engine 2 stopped, the HCU 10 executes the engine racing control again, on a condition that once the accelerator operation amount decreases to or below a predetermined value TH2 and thereafter, exceeds the threshold value TH1.

The predetermined value TH2 is set in advance for the accelerator operation amount, below which the accelerator pedal is to be determined to be turned off (i.e., the driver is allowed to be determined not to request a vehicle drive). Specifically, the predetermined value TH2 is less than the threshold value TH1.

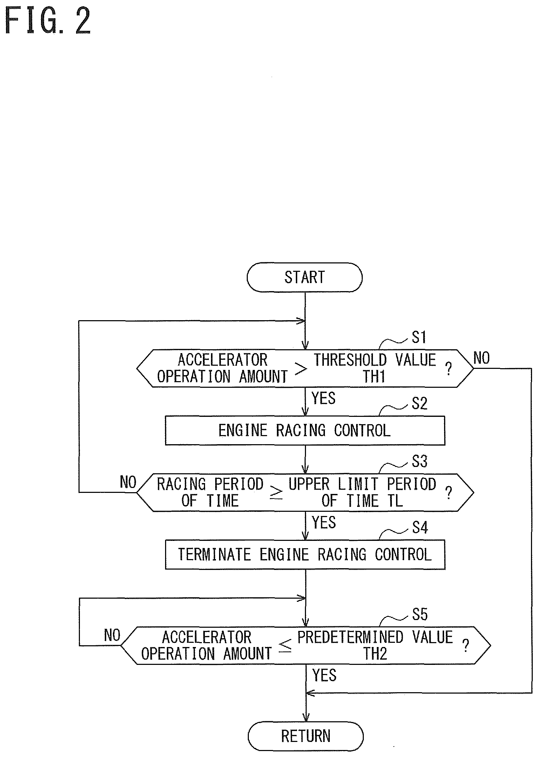

Next, referring to FIG. 2, a racing control process to be performed by the above-mentioned HCU 10 will be explained. Note that this racing control process is to be repeated while the shift position is in the P range. That is, even during the racing control process, if the shift position is switched from the P range to a travel range (e.g., D range), the racing control process is to be suspended.

Firstly, at step S1, the HCU 10 determines whether the current accelerator operation amount exceeds the threshold value TH1.

If determines at step S1 that the current accelerator operation amount exceeds the threshold value TH1 ("YES" at step S1), the HCU 10 proceeds to step S2.

Otherwise ("NO" at step S1), the HCU 10 terminates this process to thereby repeat it.

At step S2, the HCU 10 executes the engine racing control. Specifically, the HCU 10 starts the engine racing control, or maintains the engine racing control in a case where the engine racing control is already started.

After step S2, the HCU 10 proceeds to step S3.

At step S3, the HCU 10 determines whether or not: the racing period of time reaches or exceeds the upper limit period of time TL (i.e., a lapse period of time after the engine racing control is started reaches or exceeds the upper limit period of time TL).

If determines at step S3 that the racing period of time reaches or exceeds the upper limit period of time TL ("YES" at step S3), the HCU 10 proceeds to step S4.

Otherwise ("NO" at step S3), the HCU 10 proceeds to step S1 again.

At step S4, the HCU 10 terminates the engine racing control to thereby stop the engine 2. After step S4, the HCU 10 proceeds to step S5.

At step S5, the HCU 10 determines whether or not: the current accelerator operation amount is the predetermined value TH2 or smaller.

If determines at step S5 that the current accelerator operation amount is the predetermined value TH2 or smaller ("YES" at step S5), the HCU 10 terminates this racing control process to thereby execute subsequent one.

Otherwise ("NO" at step S5), the HCU 10 proceeds to step S5 again.

That is, if determines at step S5 that the current accelerator operation amount is not the predetermined value TH2 or smaller (e.g., when the accelerator pedal is depressed by more than the predetermined value TH2), the HCU 10 prohibits the engine racing control from being executed, until the accelerator operation amount decreases to the predetermined value TH2 or smaller. In other words, until the driver releases the accelerator pedal so that the accelerator operation amount becomes the predetermined value TH2 or smaller, the subsequent racing control process is to be non-executed even with the accelerator operation amount exceeding the threshold value TH1.

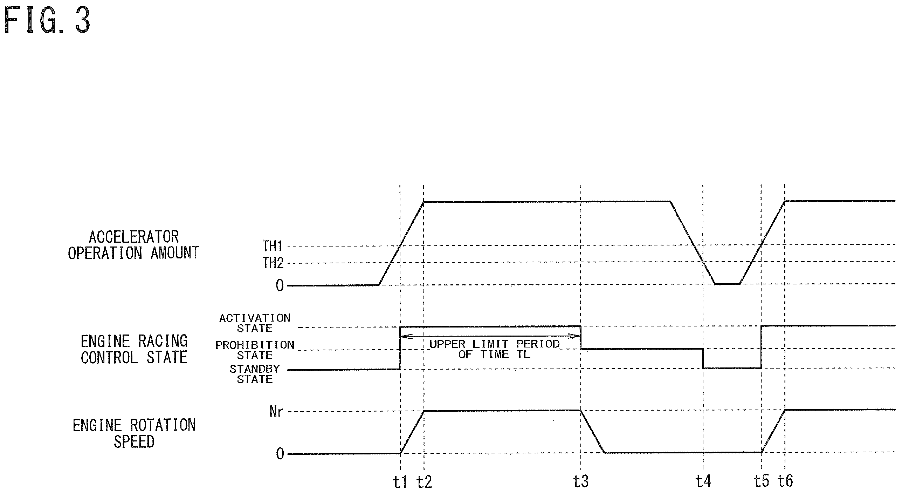

Next, referring to FIG. 3, an example of a vehicle state transition during the racing control process by the HCU 10 will be explained. FIG. 3 shows time relationships of the accelerator operation amount, a state of the engine racing control (hereinafter also referred to as "engine racing control state"), and a rotation speed of the engine 2 (hereinafter also referred to as "engine rotation speed"), in this order from the top.

In the example as shown in FIG. 3, the shift position is always in the P range (i.e., the P range is to be non-switched). Additionally, the engine racing control state is to be switched among a standby state where the engine racing control is standby for the execution (i.e., where the engine racing control is allowed to be executed but is yet to be started), an activation state where the engine racing control is currently executed, and a prohibition state where the engine racing control is currently prohibited from being executed.

At time t1, the accelerator operation amount increases to thereby exceed the threshold value TH1, switching the engine racing control state from the standby state to the activation state to thereby start the engine 2. Upon the engine start, the engine rotation speed begins to increase.

Thereafter, with the accelerator operation amount exceeding the threshold value TH1, the engine racing control is continued to thereby increase the engine rotation speed. At time t2, immediately after the engine rotation speed reaches a predetermined rotation speed Nr, the injectors 31 and the ignition plugs 32 are to be regulated so as to maintain the engine rotation speed at the predetermined rotation speed Nr. Note that the predetermined rotation speed Nr (namely, upper limit value of the engine rotation speed for the racing) is set in advance for the engine rotation speed, which is to be higher than an idle rotation speed of the engine 2. In other words, the engine rotation speed is allowed to increase to the predetermined rotation speed Nr for the racing.

At time t3, the racing period of time reaches the upper limit period of time TL, switching the engine racing control state from the activation state to the prohibition state to thereby stop the engine 2. Upon the engine stop, the engine rotation speed begins to decrease. Thereafter, even with the accelerator operation amount exceeding the threshold value TH1, the engine rotation speed decreases to zero.

At time t4, the accelerator operation amount decreases to the predetermined value TH2 to thereby switch the engine racing control state from the prohibition state to the standby state.

At time t5, the decreased accelerator operation amount to the predetermined value TH2 or smaller exceeds the threshold value TH1 again, switching the engine racing control state from the standby state to the activation state to thereby start the engine 2.

Upon the engine start, the engine rotation speed begins to increase. At time t6, the engine rotation speed increases to the predetermined rotation speed Nr to thereby be maintained thereat.

As mentioned above, the control device according to the embodiment is configured to:
when the racing period of time reaches the upper limit period of time TL, terminate the engine racing control to thereby stop the engine 2, even if the accelerator pedal is depressed by the driver by the accelerator operation amount of more than the threshold value TH1 (i.e., even if the driver is to be determined to still request the racing for the engine 2). Due thereto, it is possible to suitably prevent the exhaust system component(s) for the engine 2 from being overheated.

In other words, the control device according to the embodiment is to execute the racing for the engine 2 in response to the depression to the accelerator pedal by the accelerator operation amount of more than the threshold value TH1, until the racing period of time reaches the upper limit period of time TL.

Thus, it is possible to early warm up the engine 2 while preventing the exhaust system component(s) for the engine 2 from being overheated.

Once the control device terminates the engine racing control to thereby stop the engine 2, it permits the engine racing control on a condition that the accelerator pedal is released so as to decrease the accelerator operation amount to or below the predetermined value TH2.

That is, when the racing period of time reaches the upper limit period of time TL to thereby terminate the engine racing control, unless the accelerator operation amount exceeds the threshold value TH1 after decreasing to or below the predetermined value TH2, the control device does not execute the engine racing control again, confirming whether the driver intends to continue the racing for the engine 2 to thereby avoid the engine racing control from being unnecessarily executed contrary to the driver's intention.

Except for the racing to be daily executed by the driver (namely, an owner of the vehicle 1), there is supposed a racing to be executed during a test at an automobile inspection, such as an exhaust proximity noise test. Even during the test, the racing for the engine 2 can be executed until the racing period of time reaches the upper limit period of time TL, thereby performing the test while preventing the exhaust system component(s) for the engine 2 from being overheated.

As mentioned above, after terminating the engine racing control to thereby stop the engine 2, the control device prohibits the engine racing control from being executed until the depressed accelerator pedal by the accelerator operation amount of more than the threshold value TH1 is to be released to decrease the accelerator operation amount to or below the predetermined value TH2, avoiding the engine racing control from being executed again in a short period of time after the engine 2 is stopped, to thereby prevent the exhaust system component(s) for the engine 2 from being overheated.

As such, after terminating the engine racing control to thereby stop the engine 2, the HCU 10 is to prohibit the engine racing control from being executed until the accelerator operation amount decreases to or below the predetermined value TH2.

Then, immediately after the accelerator operation amount decreases to or below the predetermined value TH2, the HCU 10 may not permit the engine racing control. That is, after terminating the engine racing control to thereby stop the engine 2, the HCU 10 may prohibit the engine racing control from being executed until a predetermined period of time elapses after the accelerator operation amount decreases to or below the predetermined value TH2.

In this case, it is possible to execute the engine racing control again at a sufficient interval after the engine 2 is stopped, thereby surely preventing the exhaust system component(s) for the engine 2 from being overheated.

In the embodiment, the engine 2 is configured to drive the MG1, i.e., to be used for generating an electric power. Alternatively, the engine 2 may be connected to the driving wheels 9 so as to transmit the mechanical power of the engine 2 thereto, to thereby drive the vehicle 1.

Alternatively, the vehicle 1 may be configured to be driven by the engine 2, without the MG2.

Although the embodiment(s) of the present invention has been disclosed, it is obvious that those skilled in the art can make changes without departing from the scope of the present invention. It is intended that all such modifications and equivalents are encompassed by the claims.

### [Reference Signs List]

1: vehicle
2: engine
40: control unit

## Claims

1. A control device of a vehicle (1) with an engine (2), the control device comprising:
a control unit (40) to execute an engine racing control of racing the engine (2), while an accelerator operation amount exceeds a threshold value (TH1) with a non-travel range being selected, wherein
when a period of time, for which the engine racing control is continued, reaches an upper limit period of time (TL), the control unit (40) is to terminate the engine racing control to thereby stop the engine (2).

2. The control device as claimed in claim 1, wherein
after the termination for the engine racing control, the control unit (40) prohibits the engine racing control from being executed, until the accelerator operation amount decreases to or below a predetermined value (TH2) which is smaller than the threshold value (TH1).
